# EUROPEAN PATENT APPLICATION

(11) **EP 2 631 623 A1**
(43) Date of publication of application: **28.08.2013**
(21) Application number: 12006375.5
(22) Date of filing: 11.09.2012
(51) Int. Cl.: G01L 5/04, G01L 5/00, G01L 5/10, B21D 1/05

(54) **A detection roll for detecting the tension difference in a plurality of transversal portion of a metal ribbon**

(30) Priority: 23.02.2012 IT MI20120271
(71) Applicant: Selema Srl, 20833 Giussano (IT)
(72) Inventor: Cozzi, Serafino, 20841 Carate Brianza (MB) (IT)

(57) **Abstract**

A detection roll (10) for detecting the tension in a plurality of transversal portions (91) of a metal ribbon (90), which is subjected to a longitudinal tension and which is at least partially wrappable on a plurality of rolls in a tension-stretching system (70). The detection roll (10) comprises an inner cylindrical metal body (20) having a symmetry axis (12), a metal mantle (30), which covers the inner metal body (20), a series of force sensors (40) positioned between the inner metal body (20) and the metal mantle comprising a series of annular metal sectors (32) coaxially with the symmetry axis (12) and transversally and mutually constrained in order to rotate together, the inner metal body (20) comprising at least 3 mutually parallel transversal grooves (24), and also the detection roll (10) is fixed to a fixed metal structure (13), and it comprises a second plurality of rotary supports (50) inserted into at least 3 transversal grooves (24) together with said plurality of sensors (40) and positioned between the inner metal body (20) and the metal mantle (30), in order to support the metal mantle (30) and to permit a rotation substantially around the symmetry axis (12) of the metal mantle (30), with respect to the inner fixed metal body (20).

## Description

The present invention refers to a roll for detecting the tension, and particularly also the tension difference in a plurality of transversal portions of a metal ribbon, made for example of aluminum, typically wrapped in coils.

The metal ribbon is at least partially wrapped on a plurality of rolls in a tension-stretching system, which by rotating with different rotary speeds, determine a longitudinal tension on the metal ribbon itself, in order to level and smooth the thickness of the metal ribbon, at the same time reducing the defects present on the metal ribbon.

Each longitudinal portion of the metal ribbon is never simultaneously in contact with two rolls, as the advancing motion occurs longitudinally and also the stress-strain tension occurs longitudinally and it is determined by the different rotary speed between a roll and the following one.

In order to check the tension level in a plurality of transversal portions of the metal ribbon, a detection roll of the tension is used, on which the metal ribbon is partially wrapped, said detection roll being placed between two rolls of the tension-stretching system.

The detection roll is typically freewheel, i.e. it is free to rotate around its axis.

In fact, said detection roll comprises an inner body and a coating, which are mutually flushing and rotate together with a plurality of sensors, placed between said coating and said inner body.

In other terms, in the known detection rolls, the inner body is hinged and free to rotate around its axis, and also the coating is forced and worn on the same, and so it is flush with the same, and consequently the coating and the inner body are flushing and rotating together, around the axis of the inner body.

A first disadvantage is that by rotating the tensile detection roll is subjected to a series of expansion centrifugal forces, opposing to the tensile force exerted by the metal ribbon on a plurality of sensors inserted in a coating, and consequently the tension detected on the plurality of sensors is modified by the centrifugal forces and therefore the signal coming from the sensors must be considered, in order to eliminate the influence of said centrifugal forces.

Another disadvantage is that the plurality of sensors is flushed to a plurality of electric links, which by rotating together with the plurality of sensors are consequently subjected to an interference, which determines relevant noises on transmitting the signals, and the noises are proportional to the tension variations in the various transversal portions of the metal ribbon, and this fact greatly complicates both the realization of a roll for detecting the tension, and the treatment of signals, in order to try to eliminate such noises.

The aim of the present invention is that to realize a roll for detecting the tension in a plurality of transversal portions of a metal ribbon, which is easy to realize and having a low production cost.

Another aim is that to realize a roll for detecting the tension in a plurality of transversal portions of a metal ribbon, having a high rigidity and permitting to avoid an excessive heating of the same.

Still another aim is that to realize a roll for detecting the tension in a plurality of transversal portions of a metal ribbon, having a reduced number of components and in particular having a reduced number of tension sensors.

Still another aim is that to realize a tension-stretching system for a metal ribbon, having a reduced number of components and a low production cost.

A further aim is that to realize a roll for detecting the tension in a plurality of transversal portions of a metal ribbon and a tension-stretching system for a metal ribbon, which are easy to realize and advantageous from an economic point of view.

These aims according to the present invention are reached by realizing a roll for detecting the tension difference in a plurality of transversal portions of a metal ribbon and a tension-stretching system for a metal ribbon, as shown in claims 1 and 11.

Further characteristics of the invention are pointed out by the following claims.

The properties and the advantages of a roll for detecting the tension difference in a plurality of transversal portions of a metal ribbon and a tension-stretching system for a metal ribbon according to the following exemplary and non limitative description, referred to the annexed schematic drawings, in which:

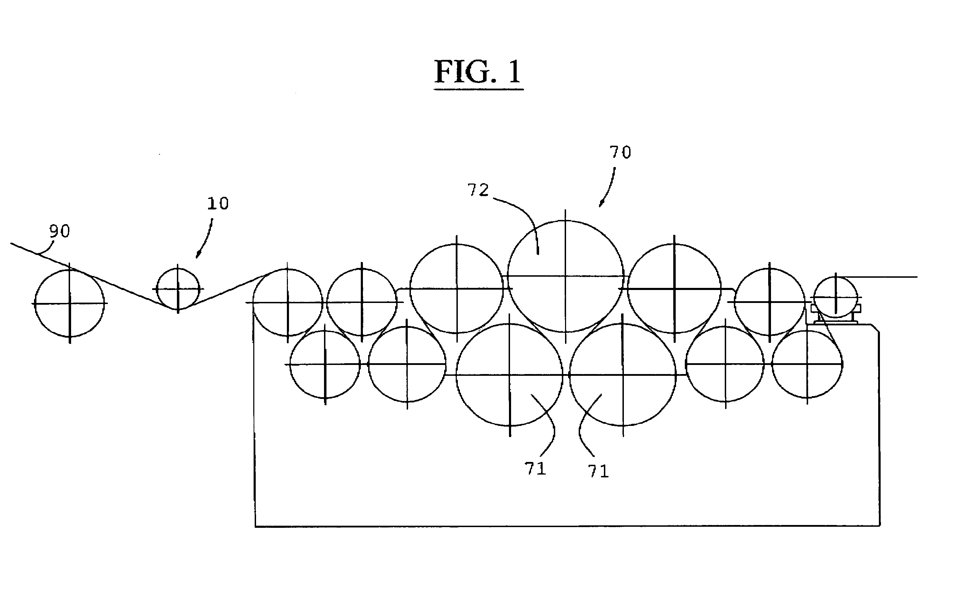

Figure 1 is a schematic, right side elevation view, showing a roll for detecting the tension difference in a plurality of transversal portions of a metal ribbon, and a tension-stretching system for a metal ribbon according to a preferred embodiment of the present invention;

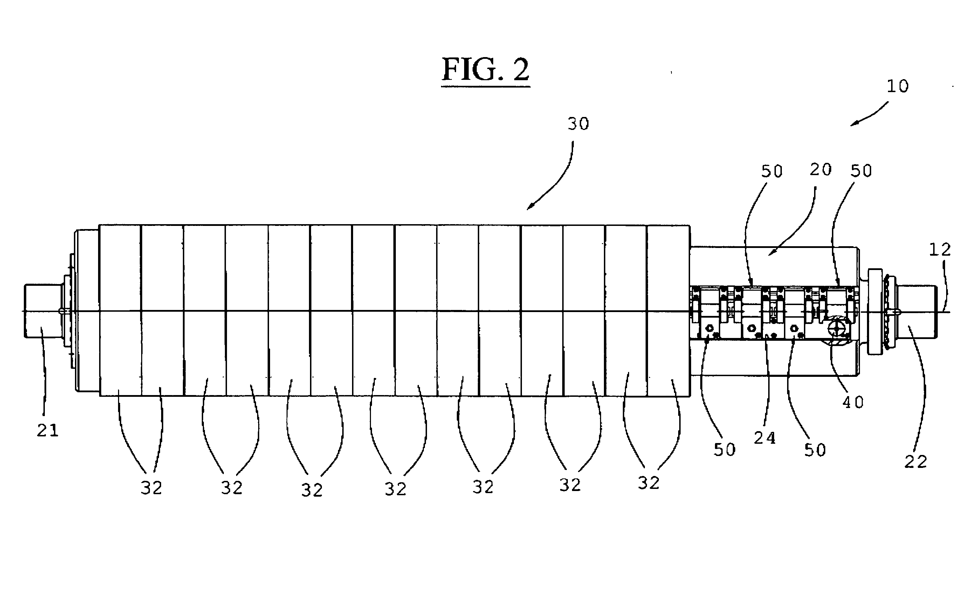

Figure 2 is a front elevation view, partially in section, of a roll for detecting the tension difference in a plurality of transversal portions of a metal ribbon, according to a preferred embodiment of the present invention;

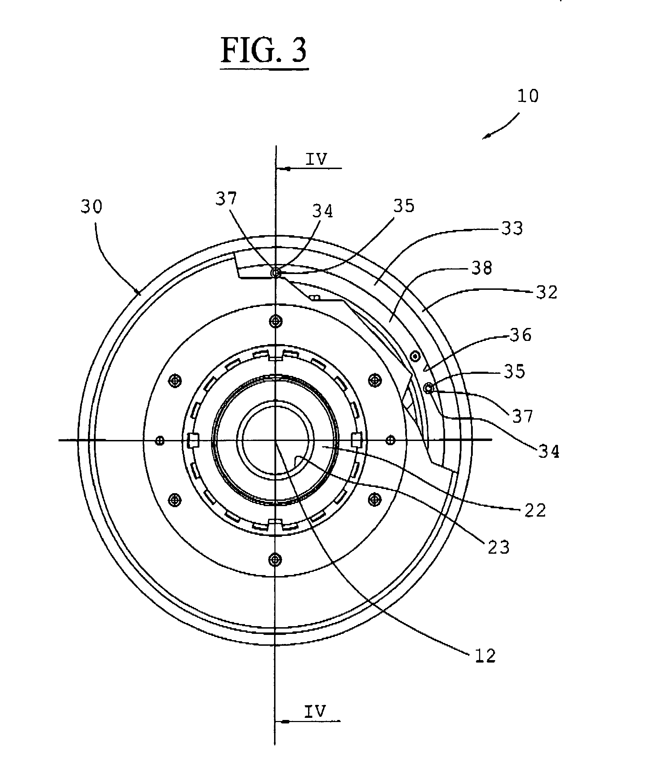

Figure 3 is a right side elevation view, partially in section and a cut-away view of the detection roll in Figure 2;

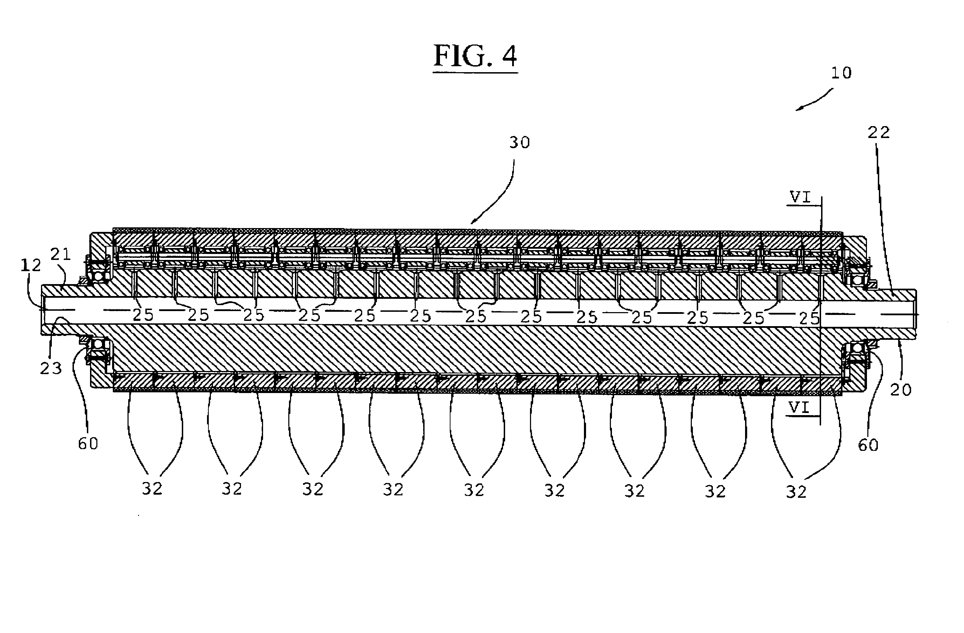

Figure 4 is a front elevation view of the detection roll in Figure 3, sectioned along the IV-IV line;

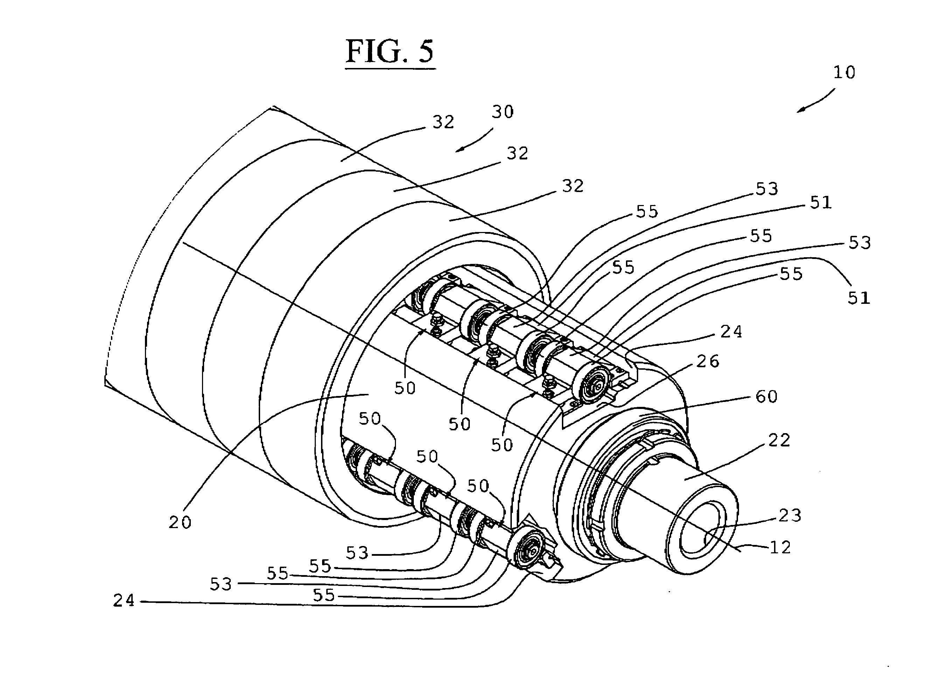

Figure 5 is a perspective, right side upper elevation view and partially in section of the detection roll in Figure 2, according to a preferred embodiment of the present invention;

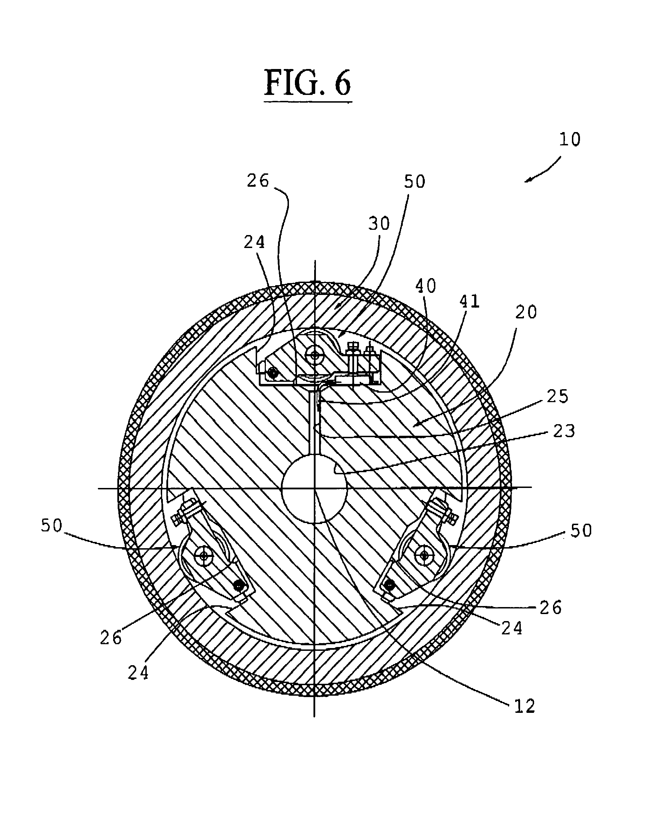

Figure 6 is a left side elevation view of the detection roll in Figure 4, in a section along the VI-VI line;

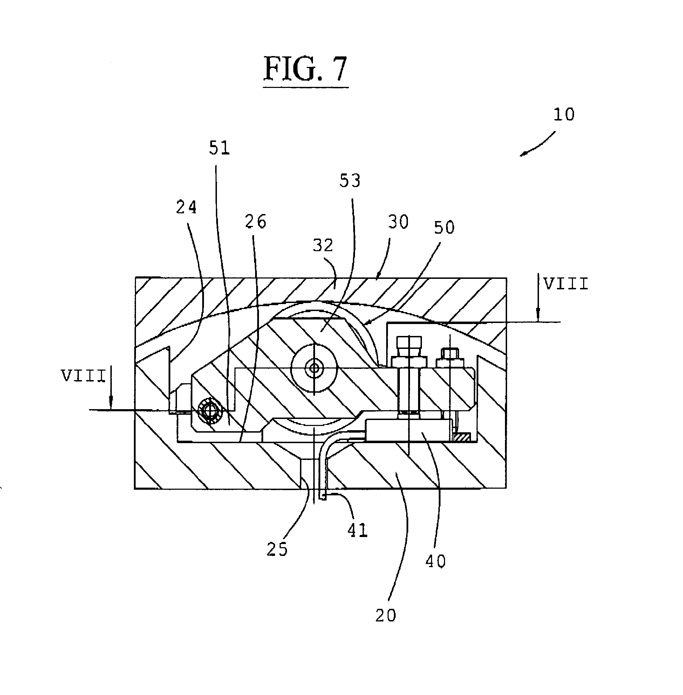

Figure 7 is a left side elevation view of a detail of the detection roll in Figure 6;

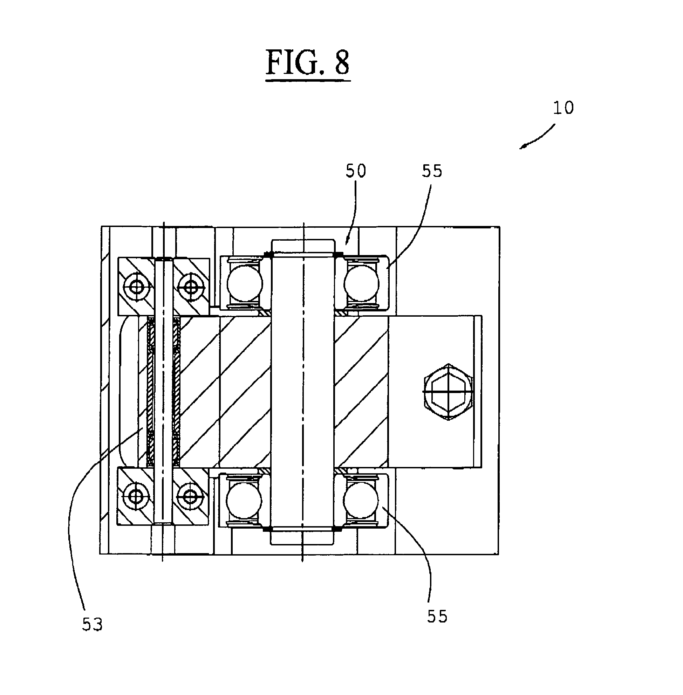

Figure 8 is a view from below of the detail in Figure 7, in section along the VIII-VIII line;

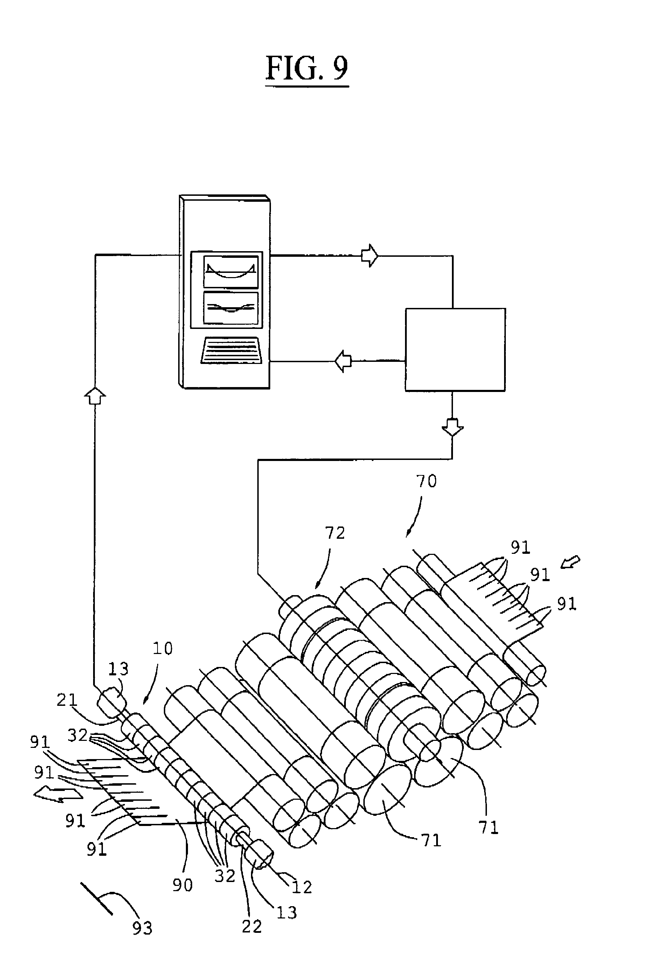

Figure 9 is a perspective, right side elevation view from the above of a roll for detecting the tension difference in a plurality of transversal portions of a metal ribbon, and a tension-stretching system for a metal ribbon according to a preferred embodiment of the present invention.

With reference to the figures, a detection roll 10 for detecting the tension in a plurality of transversal portions 91 of a metal ribbon 90 is shown, which is subjected to a longitudinal tension and which is at least partially wrappable on a plurality of rolls, in particular of a tension-stretching system 70.

Preferably, said metal ribbon 90 is at least partially wrapped on a plurality of rolls in a tension-stretching system 70, which by rotaring with different rotary speeds, determine a longitudinal tension on the metal ribbon itself, in order to strain, level and make uniform the thickness of the metal ribbon, by reducing at the same time the defects present in the metal ribbon.

Said detection roll 10 comprises an inner metal body 20, substantially cylindrical having a symmetry axis 12, a metal mantle 30, which covers said inner metal body 20, a plurality of force sensors 40, which are positioned between said inner metal body 20 and said metal mantle 30, said metal mantle 30 comprising a plurality of annular metal sectors 32, which are coaxial with said symmetry axis 12 and are placed along a longitudinal direction 93, which is orthogonal to said longitudinal direction, and also which are transversally constrained , in order to rotate with said symmetry axis 12.

Said inner metal body 20 comprises an axial central hole 23 and a plurality of radial holes 25, mutually linked to said axial central hole 23 and into which a plurality of electrical links 41 is inserted, connected to said plurality of force sensors 40.

Preferably, said detection roll 10 comprises said plurality of electrical links 41, which connect said plurality of force sensors 40 to a control and command unit, which is positioned externally to said detection roll 10.

According to the present invention, said inner metal body 20 comprises at least 3 transversal grooves 24, preferably at least 6 transversal grooves 24, which are positioned in parallel and in a symmetric way with respect to said symmetry axis 12, and it also comprises a first end 21 and a second end 22, which are fixed to a preferably metal rigid structure 13, in order to avoid the movement of said inner metal body 20.

Furthermore, said detection roll 10 comprises a second plurality of rotary supports 50, which are inserted in said at least 3 transversal grooves 24, together with said plurality of sensors 40, and also which are positioned between said inner metal body 20 and said metal mantle 30, in order to support said metal mantle 30 and to permit a rotation substantially around said symmetry axis 12 of said metal mantle 30, with respect to said inner fixed metal body 20.

Each sensor 40 is positioned between a rotary support 50 of said second plurality of rotary supports 50 and a bottom portion 26 of a transversal groove 24 of said at least 3 transversal grooves 24, preferably at least 6 transversal grooves 24, in order to be fixed and mutual with said inner, fixed metal body 20.

Preferably, each transversal groove 24 is continuous, and it develops in practice from said first end 21 to said second end 23 of said inner metal body 20.

Advantageously, in this way a high rigidity is obtained, and at the same time a limited diameter, also the structure of the inner metal body 20 is simple and cheap.

Advantageously, in this way said plurality of force sensors 40, by staying still, permits to greatly simplify the structure of said detection roll 10, so that also the plurality of correspondent electrical links 41 stays still.

It is also possible, above all, to avoid the noises of the known are by also avoiding to treat the electrical signals produced by said plurality of force sensors 40, hence obtaining even more precise measures and without variable noises, due to the pressure.

Furthermore, in this way it is possible to amplify the electrical signals produced by said plurality of force sensors 40, and to transmit the same externally to said detection roll, to said control and command electronic unit.

Instead of rotating together the detection roll as in the detection rolls of the known art, advantageously the plurality of electrical links 41 is fixed and still, and this fact greatly simplify the realization of said detection roll 10, by making extremely easy and simple the structure of the same.

Furthermore, the inner, metal body 20 being fixed, a lower number of sensors 40 is necessary, therefore the number of components and the total cost are reduced, and the realization of the detection roll 10 is simplified.

In fact, the sensors having this configuration can be positioned under said metal mantle 30, at the only area where said metal ribbon 90 wraps on said metal mantle 30, by exerting some pressure on the same.

In particular, said plurality of force sensors 40 comprises a single sensor 40 for each annular, metal sector 3 bearings 50 for each annular metal sector 32.

Preferably, said second plurality of rotary supports 50 comprises at least 3 bearings 50, in particular at least 3 bearings 50 for each annular metal sector 32, which are placed inside said at least 3 transversal grooves 24.

Preferably, each sensor 40 is a force or pressure sensor.

In particular, each sensor 40 is a pressure sensor, in particular of a piezo-electrical type.

In order to have a greater precision, preferably said second plurality of rotary supports 50 comprises at least 6 bearings, in particular at least 6 bearings for each metal annular sectors 32, which are placed inside said at least 6 transversal grooves 24.

Furthermore, said plurality of force sensors 40 preferably comprises at least one sensor 40, for each metal annular sector 32, and in particular a single sensor 40 for each metal annular sector 32.

Advantageously, in this way a reduction of the total cost, a greater constructive simplicity and a lower maintenance are obtained.

Preferably, each bearing 50 is a ball bearing and/or a roller bearing, which comprises a fixed body 53 having a first end 51, which is supported on said bottom portion 26 of a corresponding transversal groove 24, and also having a second end 52, which preferably comprises a threaded portion in which a regulating screw 54 is inserted, substantially in a perpendicular way to said bottom portion 26, furthermore each rotary support 50 comprises at least one pair of bearings, preferably ball bearings 55 or roller bearings, which are hinged to said fixed body 53, preferably according to a substantially orthogonal axis, to a line passing through said first end 51 and said second end 52.

Advantageously, in this way it is possible to regulate the radial position of said rotary supports 50, in order to keep each annular sector 32 perfectly circular and coaxial with respect to said symmetry axis 12.

Preferably, said second plurality of rotary supports 50 comprises at least 3 series of rotary supports, preferably at least 6 series of rotary supports 50, each series of rotary supports 50 being placed inside a corresponding transversal groove 24.

Advantageously, in this way it is possible to support and keep a perfect circular shape, for each metal annular sector 32 of said coating 30.

Preferably, said metal mantle 30 and said plurality of metal annular sectors 32 are transversally constrained in order to rotate together around said symmetry axis 12.

Preferably, each metal annular sector 32 comprises at least one plurality of housing 34, realized on at least a base surface 33 and preferably realized in a plurality of annular grooves 36, and also said plurality of housings 34 is uniformly placed and at an equally spaced along an orthogonal circumference to said symmetry axis 12, furthermore said metal mantle 30 comprises a plurality of metal spheres 35, each of them being inserted in a corresponding housing 34, in order to permit a relative movement along an orthogonal plane with respect to said symmetry axis 12, between a metal annular sector 32 and an adjacent metal annular sector 32.

Advantageously, this fact permits to constrain transversally said plurality of metal, annular sectors 32, in order to permit a contemporary rotation of the plurality of metal, annular sectors 32, with respect to said inner metal body 20, by keeping at the same time a reduced friction between the same, in order to not influence the relative movements and the radial compressions of the same, due to the non-planar structure of the transversal portions 91 of said metal ribbon 90.

Preferably, said detection roll 10 comprises a plurality of spacer element 37, made in a compressible polymeric material, having preferably an annular shape, each of them being fixed to a corresponding metal annular sector 32 and in particular placed into a corresponding annular groove 36, to advantageously permit the reduction of the friction at the minimum and at the same time to compensate a different radial compression of each metal, annular sector 32, with respect to an adjacent metal, annular sector 32, due to the non-planar structure of the transversal portions 91 of said metal ribbon 90.

Furthermore, inside each spacer element 37 at least one housing 34 for each metal sphere 35 is realized.

Advantageously, this permits to obtain in each spacer element 37 a lot of functions, by reducing at a minimum the number of components and by simplifying the realization of the detection roll 10.

Preferably, said detection roll 10 comprises a first plurality of rotary supports, as in particular a first plurality of ball bearings 60, which are preferably positioned at said first end 21 and at said second 22 of said inner metal body 20, and which support two corresponding ends of said metal mantle 30, by permitting the relative rotation of said metal mantle 30, with respect to said inner metal body 20, substantially around said symmetry axis 12.

Advantageously, this fact permits to greatly simplify the construction of the detection roll 10, by reducing the number of components and by avoiding to rotate the plurality of electric links 41, and by avoiding the expensive treatment of the signal, due to the noised derived from the rotation of the electric links.

Furthermore, in this way the number of force sensors 40 is reduced, as the same must not be distributed in a uniform way under each metal annular sector 32, as the pressure of said metal ribbon 90 is always directly applied on a first, small and definite radial portion of said inner metal body 20.

In particular, said first radial portion of said inner metal body 20 is comprised between 10° and 35°.

Each force sensor 40 is positioned into a corresponding transversal groove 24, at said first radial portion of said inner metal body 20.

According to another aspect of the present invention, a tension-stretching system 70 is provided, which comprises a roll for detecting the tension 10 according to any of the previously described variants and embodiments, and also comprising preferably a plurality of tension rolls and a plurality of stretching rolls 71, said metal ribbon 90 is at least partially wrappable on said plurality of tension rolls and on said plurality of stretching rolls 71 and on said roll for detecting the tension 10.

Advantageously, this fact permits to have a tension-stretching system 70 able to detect and correct defects in various transversal portions 91 of said metal ribbon 90.

Preferably, said tension-stretching system 70 comprises at least one leveling roll 72 having an expandable inner cavity through the insertion of a pressurized fluid, which is positioned between said plurality of stretching rolls 71, said metal ribbon 90 is least partially wrappable on said at least one leveling roll 72.

Preferably with respect to a vertical transversal plane passing through the symmetry axis of said at least one leveling roll 72, the plurality of tensioning roll and the plurality of stretching rolls 71 are placed in a substantially symmetrical manner.

Advantageously, this fact permits to have a compact and perfectly balanced tension-stretching system and in the same time, in order to confer to said metal ribbon 90 the most possible constant tension near the overriding limit.

Furthermore, with respect to an longitudinal plane orthogonal to said symmetry axis 12 of said detection roll 10, preferably the union of the traces of the symmetry axis of the plurality of tension rolls and of the plurality of stretching rolls 71, mutually united in a continuous way and in a sequential way, they define a line shaped substantially with triangular waves.

With respect to a typical "zig-zag" configuration or a "Z" configuration, this fact permits to have a much shorter tension-stretching system 70, with a consequent greater speed and faster answering times, as the same is very compact.

Advantageously, this permits to have a much compacter tension-stretching system in a longitudinal direction, with much faster answering times, as the length of the metal ribbon 90 comprised between the detection roll 10 and the leveling roll 72 is much shorter.

Furthermore, said at least one leveling roll 72 preferably comprises sealing means which divide said inner cavity in a plurality of chambers, each of them is singularly expandable in an independent way from the others, through introduction of a pressurized fluid; furthermore, each chamber comprises an annular shape substantially axial-symmetric with respect to the symmetry axis of said leveling roll 72 having an inner cavity.

Said tension-stretching system 70 of a metal ribbon 90 work even metal ribbons having a brittle behavior, by avoiding the breaking of the same, such as for example the hardened aluminum alloys.

Preferably, said sealing means preferably comprise a plurality of sealing elements, able to divide said inner cavity in said plurality of chambers.

Preferably, said plurality of sealing elements is a plurality of annular gaskets.

Furthermore, said sealing means preferably comprise a plurality of retaining elements, each of them being in particular associated to a corresponding sealing element, to avoid the extrusion of the same into said inner cavity.

In particular, said sealing means comprise at least one pair of annular gaskets, which are preferably placed at a first and a second end of said inner cavity.

Preferably, said plurality of chambers is placed along a transversal direction into said inner cavity.

Preferably, said at least one leveling roll 72 is provided with an inner cavity, and it comprises a plurality of inlet/outlet ducts for a pressurized fluid, each of them being linked respectively to a chamber, in order to expand the same independently with respect to the other chambers, i.e. without influencing the expansion or the contraction of an adjacent chamber.

Furthermore, in particular, said plurality of inlet/outlet ducts is linked to a pump, whose tension-stretching system 70 is preferably provided.

In particular, said leveling roll 72 also comprises a plurality of electric valves linked to a control and command electronic unit, each of them permitting, once activated, the passage of a pressurized fluid in a corresponding inlet/outlet duct, making expanding a corresponding chamber.

Each chamber is expandable in an independent way from the others, by means of a pressurized fluid, and it elastically deform a corresponding outer portion of said leveling roll 72, such as to modify an external profile of the same.

This happens in particular along a transversal direction, orthogonal with respect to the advancing direction of said metal ribbon 90.

Preferably, each chamber has an annular shape substantially axial-symmetric with respect to the axis of said leveling roll 72 having an inner cavity.

According to a preferred embodiment, said leveling roll 72 having an inner cavity, comprises an inner roll and a tubular mantle which is forced on said inner roll, in order to define said inner cavity.

Said inner roll preferably comprises a plurality of seats which respectively house a corresponding sealing element of said plurality of sealing elements.

Furthermore, said plurality of seats is preferably a plurality of annular grooves realized on the outer surface of said inner roll, which are in particular uniformly distributed on said outer surface.

Preferably, said inner roll comprises a plurality of helical grooves, respectively realized into each chamber on said outer surface of said inner roll, to permit a better distribution of said pressurized fluid into each chamber.

Preferably, said at least one leveling roll 72 having an inner cavity, comprises two sealing flanges, which are in particular made integral to said inner roll, and they also axially bind axially said metal mantle, hence avoiding a sliding of the same with respect to said inner roll in a case which one or more chambers are actuated in an expanded way.

In particular, said at least one leveling roll 72 having an expandable inner cavity, comprises at least one pair of recovery ducts of said pressurized fluid, preferably placed at one of the ends of said inner cavity.

In according to a second preferred embodiment of the present invention, said tension-stretching system 70 comprises at least one pair of leveling rolls 72, both of them provided respectively with an expandable cavity, having one or more features of the type previously described.

In other terms, according to a preferred embodiment of the present invention, said at least one leveling roll 72 having with an inner expandable cavity, are two leveling rolls 72, provided with corresponding inner cavities, and both have one or more features of the type previously described.

Advantageously, in this way it is possible to modify the outer profile of said at least one leveling roll 72 having an inner cavity, in order to level defects which are present in one or more transversal portions of said metal ribbon 90.

By expanding one or more chambers, it is in fact possible to pass from a rest configuration, in which said outer profile of said leveling roll 72 is in a linear configuration, to a deformed configuration, in which said profile can take various concave, convex, conical shapes and also more complicated, in order to level defects which are present in one or more transversal portions of said metal ribbon 90.

According to the present invention, said tension-stretching system 70 preferably comprises a plurality of tensioning rolls, which put said metal ribbon 90 in tension, maintaining the stress level on the same in the elastic field.

Furthermore, said tension-stretching system 70 preferably comprises a plurality of stretching rolls 71, which increase the stress level on said metal ribbon 90, until they arrive to a stress level corresponding to the stress limit in the elastic field.

Said tension-stretching system 70 also comprises regulation means of the stress level, which in case of an increasing of the stress level on said metal ribbon 90 reduce the stress itself

In particular, said means for regulating the stress level are able to control and regulate the speed of said stretching rolls 71, in order to advantageously avoid suddenly increasing of the stress level beyond the strain limit.

Furthermore, and advantageously, each leveling roll 72 being preferably freewheel, i.e. free to rotate, it does not cause stress variations on said metal ribbon 90.

In fact, it is noted that the expansion of one or more chambers determines variations in a radial direction of very small quantities, of the order of tenths of mm.

In this way, opposing to a stretching of said metal ribbon 90, said at least one pair of leveling rolls 71 maintaining the stress level on the same to a value near to the strain one, but for a much longer time.

Advantageously a single area is hence obtained, comprised between said plurality of stretching rolls 71, in which a plastic deformation takes place, and in which said metal ribbon 90 is subjected to a stress that is substantially equal to that of the strain mode, for a much longer time, such to permit a better plastic sliding of the crystal grains, by determining also a better planarity of said metal ribbon 90.

Advantageously, this permits to obtain a perfectly plastic deformation, and a better planarity of said metal ribbon 90.

Preferably, said plurality of stretching rolls 71 and said at least one pair of leveling rolls 72 are substantially cross-shaped.

Preferably, said metal ribbon 90 wraps on said plurality of stretching rolls 71. and on said at least one pair of leveling rolls 72, in such a way to have a very high wrapping angle, in particular greater than 240°.

Advantageously, in this way a possible micro-sliding is avoided, even at high advancing speeds of said metal ribbon 90, by avoiding consequently the formation of surface detects, such as for example scratches or traces on said metal ribbon 90, which could compromise the surface quality of the same.

Advantageously, in this way it is possible to obtain a good leveling also at the varying of the advancing speed of said metal ribbon 90.

Advantageously, by means of at least one leveling roll according to the present invention, it is also possible to compensate the differences of elastic return of the various transversal portions 91 of said metal ribbon 90, by determining consequently a smaller total elastic return.

It was observed that a roll for detecting a tension difference in a plurality of transversal portions of a metal ribbon and a tension-stretching system for a metal ribbon according to the present invention realize the aims already underlined.

The roll for detecting the tension difference in a plurality of transversal portions of a metal ribbon and the tension-stretching system for a metal ribbon of the present invention so conceived are subjected to various modifications and variants, all within the same inventive concept.

Furthermore, in practice the used materials, and also their sizes and components can be of any kind, according to the technical needs.

## Claims

1. A detection roll (10) for detecting the tension in a plurality of transversal portions (91) of a metal ribbon (90), which is subjected to a longitudinal tension and which is at least partially wrappable on a plurality of rolls of a tension-stretching system (70), said detection roll (10) comprising a inner metal body (20) substantially cylindrical, having a symmetry axis (12), a metal mantle (30) which covers said inner metal body (20), a plurality of force sensors (40) which are positioned between said inner metal body (20) and said metal mantle (30), said metal mantle (30) comprises a plurality of metal annular sectors (32) which are coaxial with said symmetry axis (12) and which are placed along a transversal direction (93) and furthermore which are transversally and mutually constrained, in order to rotate together with said symmetry axis (12), said inner metal body (20) comprising an axial central bore (23) and a plurality of radial bores (25) linked to said axial central bore (23) and into which a plurality of electric links (41) is inserted and connected with said plurality of force sensors (40), **characterized in that** said inner metal body (20) comprises at least 3 transversal grooves (24), which are positioned in a parallel and symmetric way with respect to said symmetry axis (12), said detection roll (10) also comprising a first end (21) and a second end (22) which are fixed to a fixed structure (13) preferably metallic for prevent the movement of said inner metal body (20), furthermore said detection roll (10) comprises a second plurality of rotary supports (50), which are inserted in said at least 3 transversal grooves (24) together with said plurality of sensors (40), and which are positioned between said inner metal body (20) and said metal mantle (30) to support said metal mantle (30) and to permit a rotation substantially around said symmetry axis (12) of said metal mantle (30) relatively with respect to said inner fixed metal body (20).

2. The detection roll (10) for detecting the tension according to claim 1, **characterized in that** each sensor (40) is positioned between a rotary support (50) of said second plurality of rotary supports (50) and a bottom portion (26) of a transversal groove (24) of said at least 3 transversal grooves (24), in order to result fixed and mutual with said inner fixed metal body (20).

3. The detection roll (10) for detecting the tension according to claim 1 or 2, **characterized in that** said second plurality of rotary supports (50) comprises at least 3 bearings (50), which are placed inside said at least 3 transversal grooves (24).

4. The detection roll (10) for detecting the tension according to any of claims from 1 to 3, **characterized in that** each bearing (50) is a ball bearing and/or roll bearing, which comprises a fixed body (53) having a first end (51) which leans on a bottom portion (26) of a corresponding transversal groove (24), and also having a second end (52) which comprises a threaded portion into which is inserted a regulating screw (54) substantial perpendicular to said bottom portion (26), furthermore each rotary support (50) comprises at least one pair of bearings, preferably ball bearings (55) or roll bearings, which are hinged to said fixed body (53), preferably according to a an axis substantial orthogonal to a line passing for said first end (51) and for said second end (52).

5. The detection roll (10) for detecting the tension, according to any of claims from 1 to 4, **characterized in that** said second plurality of rotary supports (50) comprises at least 3 series of rotary supports, each series of rotary supports (50) being placed into a corresponding transversal groove (24).

6. The detection roll (10) for detecting the tension according to any of claims from 1 to 5, **characterized in that** said metal mantle (30) and said plurality of metal annular sensors (32) are transversally constrained in order to rotate together around said symmetry axis (12).

7. The detection roll (10) for detecting the tension according to any of claims from 1 to 6, **characterized in that** each annular metal sector (32) comprises at least one plurality of housings (34) realized on at least one base surface (33) and preferably realized in a plurality of annular grooves (36) and furthermore said plurality of housings (34) is uniformly distributed and equally spaced along a circumference orthogonal to said symmetry axis (12), furthermore said metal mantle (30) comprises a plurality of metal spheres (35), each of them being inserted in a corresponding housing (34), in order to permit a relative sliding along a plane orthogonal to said symmetry axis (12), between a metal annular sector (32) and an adjacent metal annular sector (32).

8. The detection roll (10) for detecting the tension according to any claims from 1 to 7, **characterized in that** it comprises a plurality of spacer elements (37), realized in a compressing polymeric material, and preferably having an annular shape, each of them being fixed to a corresponding metal annular sector (32) for permitting advantageously to reduce the friction and for compensating a different radial compression of each metal annular sector (32) with respect to an adjacent metal annular sector (32), due to the non planarity of the transversal portions (91) of said metal ribbon (90), furthermore into each spacer element (37) is realized with at least one housing (34) for each metal sphere (35).

9. The detection roll (10) for detecting the tension according to any claims from 1 to 8, **characterized in that** said detection roll (10) comprises a first plurality of rotary supports, as in particular a first plurality of ball bearings (60), which are preferably positioned in proximity of said first end (21) and of said second end (22) of said inner metal body (20) and which support two corresponding ends of said metal mantle (30), by permitting the relative rotation of said metal mantle (30) with respect to said inner metal body (20) substantially around said symmetry axis (12).

10. The detection roll (10) for detecting the tension according to any claims from 1 to 9, **characterized in that** said plurality of force sensors (40) comprises a single sensor (40) for each metal annular sector (32).

11. A tension-stretching system (70) which comprises a detection roll (10) for detecting the tension according to any claims from 1 to 10, and furthermore comprising a plurality of tensioning rolls and a plurality of stretching rolls (71), said metal ribbon (90) being at least partially wrappable on said plurality of stretching rolls (71), on said plurality of tensioning rolls and on said detection roll (10) for detecting the tension.

12. Tension-stretching system (70) according to claim 11, **characterized in that** it comprises at least one leveling roll (72) having an inner cavity which can be expanded through insertion of a pressurized fluid, which is positioned between said plurality of stretching rolls (71), said metal ribbon (90) being at least partially wrappable on said at least one leveling roll (72).

13. Tension-stretching system (70) according to claim 12, **characterized in that**, with respect to a vertical transversal plane passing through the symmetry axis of said at least one leveling roll (72), the plurality of tensioning rolls and the plurality of stretching rolls (71) are placed in a substantially symmetric way.

14. Tension-stretching system (70) according to any claims from 11 to 13, **characterized in that**, with respect to a longitudinal plane orthogonal to said symmetry axis (12) of said detection roll (10), the union of the traces of the symmetry axis of the plurality of tensioning rolls and of stretching rolls (71), mutually united in a continuous way and in sequence, defines a line substantially shaped with triangular waves.

15. Tension-stretching system (70) according to any claims from 12 to 14, **characterized in that** said at least one leveling roll (72) comprises sealing means which divide said inner cavity in a plurality of chambers, each of them being singularly expandable in an independent way with respect to the others through insertion of a pressurized fluid, furthermore each chamber comprises an annular shape substantially axial-symmetric with respect to the symmetry axis of said leveling roll (72) having an inner cavity.
